# EUROPÄISCHE PATENTANMELDUNG

(11) **EP 2 124 394 A2**
(43) Veröffentlichungstag der Anmeldung: **25.11.2009**
(21) Anmeldenummer: 09160464.5
(22) Anmeldetag: 18.05.2009
(51) Int. Cl.: H04L 12/46

(54) **Schiff mit einem Schiffssystem mit zwei übergeordneten zentralen Steuerungen**

(30) Priorität: 21.05.2008 DE 102008024491
(71) Anmelder: Siemens Aktiengesellschaft, 80333 München (DE)
(72) Erfinder: Hahn, Karl-Heinz, 91094, Langensendelbach (DE); Stock, Bernhard-Martin, 90427, Nürnberg (DE)

(57) **Zusammenfassung**

Bei einem Schiff (1) mit einem Schiffssystem (3), insbesondere einem Energieerzeugungs-, Antriebs- oder Schiffsbetriebssystem, bestehend aus wenigstens zwei einzeln und im Verbund betreibbaren Schiffsteilsystemen (4a, 4b) wird erfindungsgemäß die Ausfallsicherheit dadurch erhöht, dass es eine erste und eine zweite übergeordnete zentrale Steuerung (7a bzw. 7b) zur Steuerung und Überwachung jeweils sämtlicher der wenigstens zwei Schiffsteilsysteme (4a, 4b) und einen Hauptringbus (5) umfasst, wobei die erste übergeordnete zentrale Steuerung (7a) über einen ersten Subringbus (8a) und die zweite übergeordnete zentrale Steuerung (7b) über einen zweiten Subringbus (8a) mit zu steuernden und zu überwachenden Komponenten und/oder Subsystemen (20, 30) jeweils beider Schiffsteilsysteme (4a, 4b) verbunden ist und wobei der erste Subringbus (8a) über die erste zentrale übergeordnete Steuerung (7a) und der zweite Subringbus (8b) über die zweite übergeordnete zentrale Steuerung (7b) direkt an den Hauptringbus (5) angebunden sind.

## Beschreibung

Die Erfindung betrifft ein Schiff mit einem Schiffssystem, insbesondere Energieerzeugungs-, Antriebs- oder Schiffsbetriebssystem, mit zwei übergeordneten zentralen Steuerungen gemäß Patentanspruch 1.

Die DE 10 2004 041 824 A1 offenbart ein Schiff mit einem Schiffsantriebssystem bestehend aus zwei einzeln und im Verbund betreibbaren Teilantriebssystemen mit jeweils einer eigenen speicherprogrammierbaren Steuerung zur Steuerung und Überwachung des jeweiligen Teilantriebssystems und mit jeweils einem Subringbus, über den die Steuerung mit Komponenten des Teilsystems zu deren Steuerung und Überwachung verbunden ist, wobei die Subringbusse der beiden Teilsysteme über einen Hauptringbus miteinander und mit einer übergeordneten Bedien- und Beobachtungseinrichtung (HMI- Human Machine Interface) verbunden sind. Die Bedien- und Beobachtungseinrichtung ist hierbei zusammen mit dem Hauptringbus Bestandteil eines übergeordneten Bedien- und Beobachtungssystems.

Der Hauptringbus bildet dabei mit den Subringbussen ein Datennetzwerk. Der Subringbus ist über einen einzigen Netzwerkschalter, insbesondere einen Switch, der sowohl in den Subringbus als auch in den Hauptringbus geschaltet ist, an den Hauptringbus angebunden. Ein Switch ist ein elektronisches Gerät zur Anbindung eines untergeordneten Netzwerkes an ein übergeordnetes Netzwerk. Ein Subringbus ist ein Subnetzwerk in Busform, das physikalisch vom restlichen Datennetzwerk, d.h. dem Hauptringbus und anderen Subringbussen, getrennt ist. Der Hauptringbus und die Subringbusse sind bevorzugt doppelt redundant auf Basis von Lichtwellenleitern ausgelegt.

Die Steuerung ist zusammen mit Feldgeräten und Ein- und Ausgabebaugruppen an den Subringbus des jeweiligen Teilsystems angeschlossen.

Bei einem Schiff mit einem derartigen Datennetzwerk kann bereits eine sehr hohe Ausfallsicherheit erzielt werden.

Es ist Aufgabe vorliegender Erfindung, bei einem derartigen Schiff die Ausfallsicherheit des Schiffssystems noch weiter zu erhöhen.

Die Lösung dieser Aufgabe gelingt erfindungsgemäß durch ein Schiff mit den Merkmalen des Patentanspruchs 1. Vorteilhafte Ausgestaltungen sind jeweils Gegenstand der Unteransprüche.

Erfindungsgemäß sind zwei übergeordnete zentrale Steuerungen für jeweils sämtliche der Teilsysteme statt jeweils einer eigenen Steuerung für jedes der Teilsysteme vorgesehen. Jede der zwei übergeordneten zentralen Steuerungen ist dabei in der Lage, sämtliche Teilsysteme zu steuern und zu überwachen. Hierdurch ist eine Redundanz in der Steuerung und Überwachung sämtlicher Teilsysteme gegeben, wodurch die Ausfallsicherheit des Schiffssystems erhöht werden kann. Gleichzeitig kann bei mehr als zwei Teilsystemen die Anzahl der Steuerungen reduziert werden. Beispielsweise werden nun im Fall von vier Teilsystemen statt jeweils einer eigenen Steuerung für jedes der Teilsysteme, d.h. insgesamt vier Steuerungen, nur noch die zwei übergeordneten zentralen Steuerungen benötigt.

Durch die Verwendung eines übergeordneten Hauptringbusses und durch die direkte Anbindung beider Steuerungen an den Hauptringbus ist eine besonders schnelle und ausfallsichere Kommunikation der beiden Steuerungen untereinander und mit einer übergeordnete Bedienung und Beobachtung des Schiffssystems möglich, was insbesondere für den Verbundbetrieb der beiden Schiffsteilsysteme von großem Vorteil ist. Unter einer "direkten" Anbindung wird hierbei und im Weiteren eine Anbindung ohne einen weiteren dazwischen geschalteten Kommunikationsbus verstanden. Vorliegend sind somit die beiden Steuerungen ohne einen dazwischen geschalteten Kommunikationsbus an den Hauptringbus angebunden. Durch die Anbindung der Subringbusse über ihre jeweilige zentrale Steuerung an den Hauptringbus kann der Datenverkehr in dem jeweiligen Subringbus und damit dessen Ausfallwahrscheinlichkeit und Verzögerungszeiten in der Datenübertragung klein gehalten werden, denn Daten, die beispielsweise zwischen den beiden zentralen Steuerungen ausgetauscht oder einer zentralen Steuerung und einer übergeordneten Bedien- und Beobachtungsebene ausgetauscht werden, müssen dann nicht in den Subringbus eingespeist werden und diesen somit auch nicht belasten.

Gemäß einer besonders vorteilhaften Ausgestaltung der Erfindung sind die zentralen Steuerungen derart eingerichtet und miteinander gekoppelt, dass in einem Normalbetrieb die erste zentrale Steuerung über den ersten Subringbus sämtliche Schiffsteilsysteme steuert und überwacht und dass bei einem Ausfall der ersten zentralen Steuerung oder des ersten Subringbusses dann die zweite zentrale Steuerung über den zweiten Subringbus sämtliche Schiffsteilsysteme steuert und überwacht.

In dem Normalbetrieb ist somit die erste zentrale Steuerung aktiv geschaltet (d.h. übernimmt die Funktion eines "Masters") und übernimmt alleine die Steuerung und Überwachung sämtlicher Teilsysteme, während die andere Steuerung passiv bleibt ("Slave"). Bei einem Ausfall der aktiven ersten zentralen Steuerung oder dem ihr zugeordneten ersten Subringbus kann dann die andere, bis dahin inaktive zweite zentrale Steuerung aktiv werden (d.h. die Funktion des Masters übernehmen) und alleine über den zweiten Subringbus die Steuerung und Überwachung sämtlicher Teilsysteme übernehmen.

Von Vorteil sind die zentralen übergeordneten Steuerungen der beiden Schiffsteilsysteme über den Hauptringbus mit einer übergeordneten Bedien- und Beobachtungseinrichtung verbunden, wobei die Bedien- und Beobachtungseinrichtung vorzugsweise direkt, d.h. ohne einen dazwischen geschalteten Kommunikationsbus, an den Hauptringbus angebunden ist. Aufgrund der Redundanz auf der Ebene der Steuerung und Überwachung durch die übergeordneten zentralen Steuerungen ist dann bei Ausfall einer der zentralen Steuerungen oder eines der Subringbusse jedoch weiterhin die Bedien- und Beobachtbarkeit des Schiffssystems von der Brücke aus gewährleistet. Ein derartiges System zeichnet sich aufgrund seiner geringen Komplexität durch eine besonders schnelle und ausfallsichere Kommunikation zwischen den Steuerungen und der Bedien- und Beobachtungsebene aus.

Eine weitere Erhöhung der Ausfallsicherheit kann dadurch erzielt werden, dass die übergeordneten zentralen Steuerungen physikalisch sowohl von dem jeweiligen Subringbus als auch von dem Hauptringbus getrennt sind.

Gemäß einer besonders vorteilhaften Ausgestaltung der Erfindung sind die übergeordneten zentralen Steuerungen zusätzlich über eine direkte Leitungsverbindung miteinander verbunden. Über diese Leitungsverbindung kann beispielsweise ein Softwareabgleich zwischen den beiden Steuerungen erfolgen. Wird beispielsweise eine neue Version der Steuerungssoftware auf eine der beiden Steuerungen eingespielt, so kann diese Software über die Leitungsverbindung automatisch an die andere Steuerung übertragen und in diese eingespielt werden. Hierdurch ist beispielsweise ein nahezu stoßfreier Software-Update möglich und es ist sichergestellt, dass in beiden Steuerungen die jeweils gleiche Steuerungssoftware hinterlegt ist. Außerdem kann über die direkte Leitungsverbindung eine gegenseitige Leben-Tod-Abfrage der beiden Steuerungen z.B. durch Austausch von Lebenszeichentelegrammen, erfolgen. Wenn beispielsweise die inaktive Steuerung kein Lebenszeichentelegramms von der aktiven Steuerung erhält, kann sie über die Leitungsverbindung eine Mitteilung an die aktive Steuerung senden, dass sie die Master-Funktion übernimmt und ab sofort die aktive Steuerung ist. Wesentlich ist, dass durch die direkte Leitungsverbindung der Hauptringbus nicht zusätzlich durch den Datenverkehr zwischen den beiden Steuerungen belastet wird. Außerdem ist eine Datenübertragung zwischen den beiden Steuerungen auch unabhängig von der Funktionsfähigkeit des Hauptringbusses möglich. Hierdurch kann die Ausfallsicherheit noch weiter erhöht werden.

Zur weiteren Erhöhung der Ausfallsicherheit können die übergeordneten zentralen Steuerungen räumlich unterschiedlich, insbesondere in unterschiedlichen Schiffsicherungsbereichen, in dem Schiff angeordnet sein.

Eine weitere Erhöhung der Ausfallsicherheit ist auch dadurch möglich, dass die Schiffsteilsysteme räumlich unterschiedlich, insbesondere in unterschiedlichen Schiffsicherungsbereichen, in dem Schiff angeordnet sind. Die Subringbusse können sich deshalb auch jeweils über zwei oder mehr Schiffsicherungsbereiche erstrecken.

Für einen von dem Hauptringbus und einer übergeordneten Bedien- und Beobachtungseinrichtung autarken Betrieb der Teilsysteme ist jeder der Subringbusse mit einer lokalen Bedien- und Beobachtungseinrichtung verbunden. Autark bedeutet in diesem Zusammenhang, dass das Schiffssystem bzw. Schiffsteilsystem unabhängig von einer höheren Ebene, z.B. einer Bedien- und Beobachtungseinrichtung, seine Funktionalität eigenständig beibehalten kann, insbesondere im Bedarfs- oder Notfall, z.B. bei Feuer und bei Ausfall der höheren Ebene.

Von Vorteil umfasst jedes der Schiffsteilsysteme mehrere Subsysteme mit jeweils mehreren Subsystemkomponenten, die jeweils über ein sternförmiges Bussystem miteinander und mit jeweils beiden Subringbussen in Verbindung stehen. Hierdurch können zwischen peripheren Geräten Daten schnell, direkt und ohne Belastung des übergeordneten Subringbusses ausgetauscht werden.

Bevorzugt ist der Hauptringbus als ein doppelt redundanter Ringbus ausgebildet ist. Hierdurch ist auch eine Redundanz auf der Bedien- und Beobachtungsebene möglich.

Aufgrund seiner geringen Störanfälligkeit und der hohen Datenübertragungskapazität ist der Hautringbus von Vorteil als ein faseroptischer Ringbus ausgebildet ist, der vorzugsweise das Ethernet-Protokoll nutzt.

Die Subringbusse sind von Vorteil jeweils als ein faseroptischer Ringbus ausgebildet, der vorzugsweise das Profibus-Protokoll nutzt.

Die Erfindung sowie weitere vorteilhafte Ausgestaltungen der Erfindung gemäß den Merkmalen der Unteransprüche werden im Folgenden anhand von Ausführungsbeispielen in den Figuren näher erläutert. Darin zeigen:
- FIG 1: ein Schiff mit einem Energieerzeugungssystem bestehend aus zwei in Längsrichtung des Schiffes verteilten Teilsystemen in Seitenansicht,
- FIG 2: ein Schiff mit einem Energieerzeugungssystem bestehend aus zwei in Querrichtung des Schiffes verteilten Teilsystemen in Draufsicht,
- FIG 3: das Bedien- und Beobachtungssystem und das Energieerzeugungssystem von FIG 1 und FIG 2 im Detail,
- FIG 4: ein Schiff mit einem Antriebssystem bestehend aus zwei Teilsystemen.

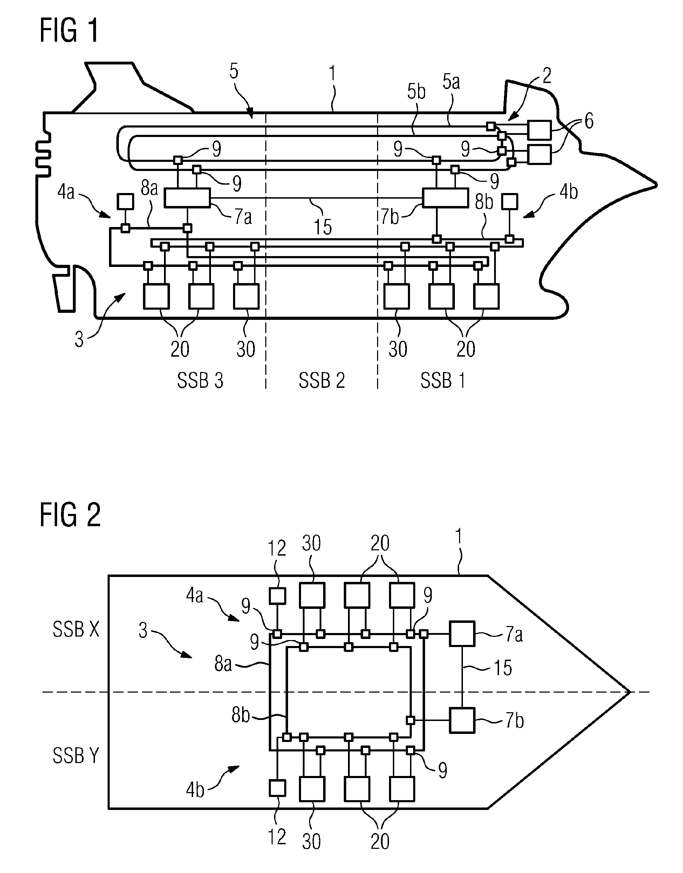

FIG 1 zeigt in einer prinzipiellen Darstellung eine Seitenansicht eines Schiffes 1 mit einem übergeordneten Bedien- und Beobachtungssystem 2 und einem Schiffssystem in Form eines Energieerzeugungssystems 3 bestehend aus zwei Teilsystemen 4a, 4b, die einzeln und im Verbund betreibbar sind. Das Bedien- und Beobachtungssystem 2 umfasst einen doppelt redundant ausgelegten Hauptringbus 5 und zwei Bedien- und Beobachtungseinrichtungen 6, die direkt an den Hauptringbus 5 angeschlossen bzw. angebunden sind. Jedes der Teilsysteme 4a, 4b umfasst jeweils eine gleiche Anzahl von Subsystemen, hier jeweils zwei Energieerzeugungseinheiten 20 und jeweils eine Netzkupplungseinheit 30.

Das Energieerzeugungssystem 3 umfasst eine erste übergeordnete zentrale Steuerung 7a und eine zweite übergeordnete zentrale Steuerung 7b zur Steuerung und Überwachung jeweils beider Teilsysteme 4a, 4b, wobei die erste übergeordnete zentrale Steuerung 7a über einen ersten Subringbus 8a und die zweite übergeordnete zentrale Steuerung 7b über einen zweiten Subringbus 8a mit den zu steuernden und zu überwachenden Subsystemen 20, 30 jeweils beider Teilsysteme 3a, 3b verbunden ist. Der erste Subringbus 8a ist dabei über die erste zentrale übergeordnete Steuerung 7a und der zweite Subringbus 8b über die zweite übergeordnete zentrale Steuerung 7b direkt an den Hauptringbus 5 angebunden und damit mit den übergeordneten Bedien- und Beobachtungseinrichtungen 6 verbunden.

Die übergeordneten zentralen Steuerungen 7a, 7b sind zu ihrer Synchronisation über eine direkte Leitungsverbindung 15 miteinander verbunden, über die schnell und auf direktem Weg beispielsweise eine automatische Softwareaktualisierung erfolgen kann oder Lebenszeichentelegramme zwischen den Steuerungen 7a, 7b ausgetauscht werden können, ohne dass hierfür der Hauptringbus 5 mit zusätzlichem Datenverkehr belastet wird.

Zur Erhöhung der Ausfallsicherheit sind die beiden Teilsysteme 4a, 4b in Schiffslängsrichtung in jeweils unterschiedlichen Schiffssicherungsbereichen des Schiffes angeordnet. So ist beispielsweise das Teilsystem 4a in einem Schiffssicherungsbereich SSB 3 im Heck des Schiffes und das Teilsystem 4b in einem Schiffssicherungsbereich SSB 1 im Vorderschiff angeordnet. Der Hauptringbus 8, die Subringbusse 8a, 8b und die direkte Leitungsverbindung erstrecken sich deshalb in Schiffslängsrichtung über mehrere Schiffssicherungsbereiche SSB 3 bis SSB 1 vom Heck bis zum Vorderschiff.

Zur weiteren Erhöhung der Ausfallsicherheit sind die zentralen Steuerungen 7a, 7b räumlich unterschiedlich, zu den restlichen Komponenten der Teilsysteme 4a, 4b in dem Schiff 1 angeordnet (z.B. in unterschiedlichen Räumen des Schiffes).

Alternativ können, wie in FIG 2 in der Draufsicht eines Schiffes dargestellt, die beiden Teilsysteme 4a, 4b auch in Schiffsquerrichtung in jeweils unterschiedlichen Schiffssicherungsbereichen des Schiffes angeordnet sein (wobei zur Vereinfachung der Darstellung in FIG 2 der Hauptringbus 5 und die Bedien- und Beobachtungseinrichtungen 6 weggelassen wurden). So ist beispielsweise bei dem Schiff 1 das Teilsystem 4a in einem Schiffssicherungsbereich SSB X auf der Backbordseite des Schiffes und das Teilsystem 4b in einem Schiffssicherungsbereich SSB Y auf der Steuerbordseite des Schiffes angeordnet. Der Hauptringbus 8, die Subringbusse 8a, 8b und die direkte Leitungsverbindung 15 erstrecken sich deshalb in Schiffsquerrichtung von der Backbordseite zu der Steuerbordseite über zumindest zwei Schiffssicherungsbereiche des Schiffes. Zur weiteren Erhöhung der Ausfallsicherheit sind die zentralen Steuerungen 7a, 7b auch hier räumlich unterschiedlich zu den restlichen Komponenten der Teilsysteme 4a, 4b in dem Schiff 1 angeordnet (z.B. in unterschiedlichen Räumen des Schiffes).

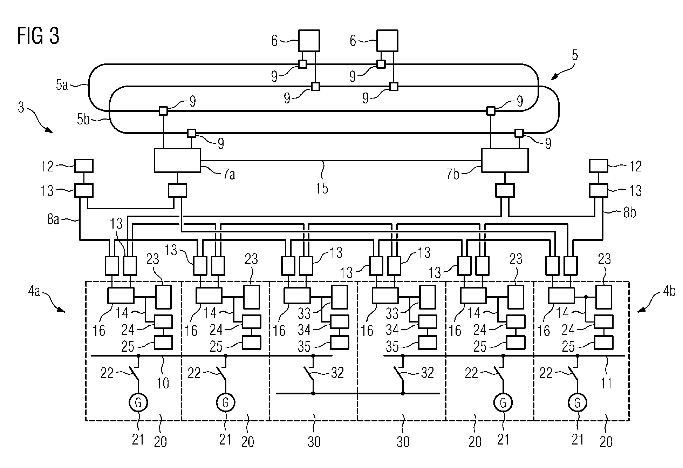

Wie FIG 3 für die Teilsysteme 4a, 4b von FIG 1 und FIG 2 im Detail zeigt, umfasst ein elektrisches Bordnetz des Schiffes zwei miteinander verbindbare Sammelschienen 10, 11. Die Energieerzeugungseinheiten 20 des Teilsystems 4a dienen zur Erzeugung elektrischer Energie für die Sammelschiene 10 und die Energieerzeugungseinheiten 20 des Teilsystems 4b dienen zur Erzeugung elektrischer Energie für die Sammelschiene 11. Mittels der Netzkupplungseinheiten 30 der beiden Teilsysteme 4a, 4b sind die beiden Sammelschienen 10, 11 miteinander verbindbar.

Die beiden Teilsysteme 4a, 4b sind einzeln oder im Verbund betreibbar. Sie können somit jeweils einzeln oder beide gemeinsam in jeweils eine oder in beide miteinander gekuppelte Sammelschienen 10, 11 elektrische Energie speisen.

Jede der Energieerzeugungseinheiten 20 umfasst einen von einer nicht näher dargestellten Verbrennungskraftmaschine, vorzugsweise von einem Dieselmotor, angetriebenen Generator 21, einen Schalter 22 zur Zu- bzw. Abschaltung des Generators 21 zu der jeweiligen Sammelschiene 10 bzw. 11 sowie mehrere periphere Geräte 23, 24, 25, hier ein Generator-Schutzgerät 23, beispielsweise zum Schutz des Generators 21 und der Sammelschiene 10 bzw. 11 vor Kurzschlüssen und Überspannungen, eine Ein-/Ausgabebaugruppe 24 für analoge und digitale Signale sowie ein Generator-Synchronisiergerät 25 zum Synchronisieren des Generators 21 mit der Sammelschiene 10 bzw. 11 (z.B. zur Frequenz- und Phasenübereinstimmung).

Jede der Netzkupplungseinheiten 30 umfasst einen Kupplungsschalter 32 und darüber hinaus mehrere periphere Geräte 33, 34, 35, hier ein Schutzgerät 33 zum Schutz der Kupplung vor Kurzschlüssen, eine Ein-/Ausgabebaugruppe 34 für analoge und digitale Signale sowie ein Synchronisiergerät 45 zum synchronisierten Zuschalten des zugeordneten Kupplungsschalters 32.

Jede der übergeordneten zentralen Steuerungen 7a, 7b kann die Funktionen der Geräte 23, 24, 25 bzw. 33, 34, 45 einer Energieerzeugungseinheit 20 oder Netzkupplungseinheit 30 steuern und überwachen und bildet zusammen mit diesen Geräten ein Automatisierungssystem für die Energieerzeugungseinheit 20 bzw. Netzkupplungseinheit 30. Dieses Automatisierungssystem übernimmt die Aufgabe eines Power-Management-Systems, d.h. es steuert die Synchronisierung und Zuschaltung bzw. Abschaltung eines Generators 21 zu bzw. von der Sammelschiene 10 bzw. 11, schützt den Generator 21 und die Sammelschiene 10 bzw. 11 vor unerlaubten Betriebszuständen (z.B. Kurzschlüssen), ermittelt die dem Bordnetz zur Verfügung stehende und die von Schiffsverbrauchern benötigte elektrische Leistung, steuert die Zuschaltung und Abschaltung von Verbrauchern zu bzw. von den Sammelschienen 10, 11 oder steuert die Kupplung der beiden Sammelschienen 10, 11 mittels der beiden Kupplungsschalter 32.

Der Hauptringbus 5 ist doppelt redundant als Industrial Ethernet auf Basis von Lichtwellenleitern mit einer bidirektionalen Datenübertragung (d h. einer Datenübertragung in beiden Ringrichtungen) ausgebildet. Für die doppelte Redundanz weist der Hauptringbus eine doppelten Leitungsführung auf, d.h. es sind zwei Busringe 5a, 5b vorhanden.

Jeder der Subringbusse 8a, 8b ist einfach redundant als Profibus auf Basis von Lichtwellenleitern mit einer bidirektionalen Datenübertragung (d.h. einer Datenübertragung in beiden Ringrichtungen) ausgebildet.

Die Anbindung der über den Hauptringbus 5 miteinander kommunizierenden Komponenten oder Subsysteme (hier der Bedien- und Beobachtungseinrichtungen 6 und der zentralen Steuerungen 7a, 7b) an den Hauptringbus 5 erfolgt über optische Netzwerkschalter 9, die als Industrial Ethernet Optical Switch Modul ausgeführt sind und die die Komponenten physikalisch von dem Hauptringbus 5 entkoppeln und durch Filterung des Datenverkehrs in dem Hauptringbus 5 anhand von Ethernet-Adressen der an den Hauptringbus 5 angeschlossenen Komponenten oder Subsysteme dafür sorgen, dass nur Daten für die jeweilige Komponente bzw. das jeweilige Subsystem auch an diese weitergeleitet werden. Für jede der Komponenten bzw. Subsysteme ist hierbei für jeden der beiden redundanten Busringe 5a, 5b ein jeweils gesonderter Netzwerkschalter 9 vorgesehen. Ein Netzwerkschalter 9 wandelt hierzu die optischen Ethernet-Signale in elektrische Ethernet-Signale um und umgekehrt.

In ähnlicher Weise erfolgt die Anbindung miteinander kommunizierender Komponenten oder Subsysteme der Teilsysteme 4a bzw. 4b (hier der zentralen Steuerung 7, der peripheren Geräte 23, 24, 25, 33, 34, 35 und einer lokalen Bedien- und Beobachtungseinrichtung 12) an jeden der beiden Subringbusse 8a, 8b über optische Verbindungsmodule 13, die als Profibus Optical Link Modul (Netzwerkschalter) ausgeführt sind und die die Komponenten physikalisch von den Subringbussen 8a, 8b entkoppeln und durch Filterung des Datenverkehrs in den Subringbussen 8a, 8b anhand von Profibus-Adressen der an die Subringbusse 8a, 8b angeschlossenen Komponenten oder Subsysteme dafür sorgen, dass nur Daten für die jeweilige Komponente oder das jeweilige Subsystem auch an diese bzw. dieses weitergeleitet werden. Das optische Verbindungsmodul 13 wandelt hierzu die optischen Profibus-Signale in elektrische Profibus-Signale um und umgekehrt.

Das Schutzgerät 23, 33 und die Ein-/Ausgabebaugruppe 24, 34 einer Energieerzeugungseinheit 20 bzw. Netzkupplungseinheit 30 sind über einen sternförmigen Bus 14 in Kupfertechnologie (d.h. mit elektrischen Leitern), vorzugsweise einen Profibus, miteinander und über ein Koppelmodul 16 mit jeweils einem optischen Verbindungsmodul (Optical Link Module) 13 für jeden der Subringbusse 8a, 8b verbunden, über das die Ankopplung des Feldbusses und somit dieser Komponenten 23, 24, 33, 34 an die übergeordneten Subringbusse 8a, 8b und damit auch an die zentralen Steuerungen 7a, 7b erfolgt. Das Koppelmodul 16 hat dabei die Aufgabe, die von den peripheren Feldgeräten 23, 24 bzw 33, 34 erhalten Daten auf beide Subringbusse 5a, 5b zu verteilen und umgekehrt.

Die Subringbusse 8a, 8b sind somit über ihre jeweilige zentrale Steuerung 7a, 7b direkt an den Hauptringbus 5 angebunden. Da die Anbindung dabei jeweils über einen in den Hauptringbus 2 geschalteten optischen Netzwerkschalter 9 und ein in den Subringbus 8 geschaltetes optisches Verbindungsmodul 13 erfolgt, sind die zentralen Steuerung 7a, 7b physikalisch sowohl von den Subringbussen 8a, 8b als auch von dem übergeordneten Hauptringbus 5 getrennt.

Im Normalbetrieb ist nur eine der beiden Steuerungen 7a, 7b aktiv und steuert und überwacht über ihren Subringbus 8a bzw. 8b beide Teilsysteme 4a, 34b, während die andere Steuerung inaktiv bleibt. Die Koppelmodule 16 leiten hierzu nur Daten des Subringbusses 16 der aktiven Steuerung an die Komponenten und Subsysteme der beiden Teilsysteme 4a, 4b weiter.

Bei einer Störung in der aktiven Steuerung oder in dem dieser zugeordneten Subringbus 8a bzw. 8b teilt die aktive Steuerung der inaktiven Steuerung die Störung mit. Zur Erkennung eines Totalausfalls der aktiven Steuerung stehen die beiden Steuerungen über Lebenszeichentelegramme miteinander in Verbindung. Bleiben innerhalb einer vorgegebenen Zeit Lebenszeichentelegramme der aktiven Steuerung aus, interpretiert dies die bis dahin inaktive Steuerung als Ausfall der aktiven Steuerung.

Nach Empfang einer Störungsmitteilung oder Erkennung eines Totalausfalls sendet die bis dahin inaktive Steuerung sowohl an die bis dahin aktive Steuerung als auch an die Koppelmodule 16 eine Mitteilung, dass sie die Steuerung und Überwachung der Teilsysteme 4a, 4b übernimmt. Daraufhin wird die bisher aktive Steuerung inaktiv und stellt die Versendung von Steuerbefehlen über den ihr zugeordneten Subringbus an die Teilsysteme 4a, 4b und die Versendung von Beobachtungsdaten über den Hauptringbus 5 an die Bedien- und Beobachtungseinrichtungen 6 ein. Stattdessen wird die bisher inaktive Steuerung aktiv und nimmt die Versendung von Steuerbefehlen über den ihr zugeordneten Subringbus und die Versendung von Beobachtungsdaten über den Hauptringbus 5 an die Bedien- und Beobachtungseinrichtungen 6 auf. Die Koppelmodule 16 schalten hierzu um von einer Datenweiterleitung von dem Subringbus der nunmehr inaktiven Steuerung zu einer Datenweiterleitung von dem Subringbus der nunmehr aktiven Steuerung.

Eine weitere Erhöhung der Ausfallsicherheit ist dadurch gegeben, dass jeder der Subringbusse 8a, 8b für einen autarken Betrieb der Teilsysteme 4a, 4b mittels eines optischen Verbindungsmoduls 13 mit jeweils einer lokalen Bedien- und Beobachtungseinrichtung 12, z.B. eine Bedientafel, verbunden ist. Die beiden lokalen Bedien- und Beobachtungseinrichtung 12 sind dabei ebenfalls in Schiffslängs- oder -querrichtung in jeweils unterschiedlichen Schiffssicherungsbereichen des Schiffes 1 angeordnet.

Die lokale Bedien- und Beobachtungseinrichtung 12 bietet dem Bedienpersonal vor Ort, z.B. im Maschinenraum, alle Überwachungs- und Steuerungsmöglichkeiten, wie sie auch dem Kapitän auf der Brücke mittels der Bedien- und Beobachtungseinrichtungen 6 für die Teilsysteme 4a, 4b zur Verfügung stehen. Damit kann auch bei Ausfall des Bedien- und Beobachtungssystems 2 die komplette Steuerung und Überwachung der Teilsysteme 4a, 4a vor Ort durch beispielsweise den leitenden Ingenieur erfolgen.

Das Schiff 1 weist somit eine Redundanz sowohl auf der Bedien- und Beobachtungsebene als auch auf der unterlagerten Steuerungs- und Überwachungsebene auf. Bei einem Ausfall einer zentralen Steuerung 7a bzw. 7b wird automatisch auf die andere Steuerung 7b bzw. 7a umgeschaltet. Bei einem Ausfall des Subringbusses 8a bzw. 8b der aktiven Steuerung 7a bzw. 7b kann auf die andere Steuerung 7b bzw. 7a mit dem ihr zugeordneten Subringbus 8b bzw. 8a umgeschaltet werden. Fällt das Bedien- und Beobachtungssystems 2 aus, kann eine Bedienung und Beobachtung über die lokale Bedien- und Beobachtungseinrichtung 12 des Subringbusses 8a bzw. 8b der aktiven Steuerung 7a bzw. 7b erfolgen. Bei Ausfall einer Komponente oder eines Subsystems stehen noch andere intakte Komponenten oder Subsysteme zur Verfügung. Sogar bei Ausfall eines Teilsystems 4a bzw. 4b steht noch das andere Teilsystem 4b bzw. 4a zur Verfügung und erlaubt somit zumindest einen eingeschränkten Betrieb.

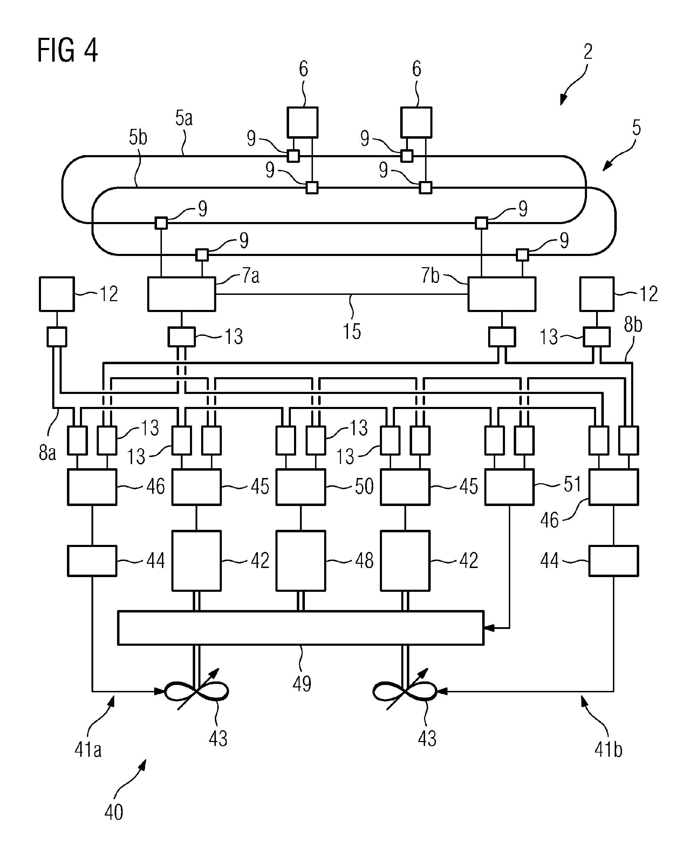

FIG 4 zeigt das Bedien- und Beobachtungssystem von FIG 1 mit einem daran angebundenen Antriebssystem 40 als Schiffssystem. Das Antriebsystem 40 besteht aus zwei Antriebsteilsystemen 41a, 41b, die einzeln oder im Verbund betreibbar sind und somit einzeln oder im Verbund das Schiff 1 antreiben können. In Bezug zu FIG 1 und 2 gleiche Komponenten sind hierbei auch mit gleichen Bezugszeichen versehen.

Zwei übergeordnete zentrale Steuerungen 7a, 7b dienen zur Steuerung und Überwachung jeweils beider Teilsystemen 41a, 41b. Jede der zentralen Steuerungen 7a, 7b ist hierbei über jeweils einen eigenen zugeordneten Subringbus 8a bzw. 8b mit Komponenten jeweils beider Teilsysteme 41a, 41b zu deren Steuerung und Überwachung verbunden. Die Subringbusse 8a, 8b sind über die zentralen Steuerungen 7a, 7b direkt mit dem doppelt redundant ausgelegten Hauptringbus 5 verbunden, an dem wiederum direkt die Bedien- und Beobachtungseinrichtungen 6 des übergeordneten Bedien- und Beobachtungssystems 2 angeschlossen sind.

Jedes der Teilsysteme 41a, 41b umfasst jeweils einen Elektromotor 42 zum Antrieb eines Propellers 43, einen Verstellantrieb 44 für die Propellerblätter des Propellers 43, und weiterhin als periphere Geräte eine Antriebssteuerung 45 für den Elektromotor 42 und eine Verstellantriebssteuerung 46 für den Verstellantrieb 45. Weiterhin umfasst das Antriebssystem 40 neben den beiden Teilsystemen 41a, 41b eine Gasturbine 48 und ein Getriebe 49 sowie als periphere Geräte eine Gasturbinensteuerung 50 und eine Kupplungssteuerung 51.

Außerdem ist jeder der Subringbusse 8a, 8a für den autarken Betrieb des Antriebssystems 40 mit jeweils einer lokalen Bedien- und Beobachtungseinrichtung 12, z.B. einer Bedientafel, verbunden.

Die Anbindung der peripheren Geräte 45, 46, 50, 51 der zentralen Steuerungen 7a, 7b und der Bedien- und Beobachtungseinrichtungen 12 an den jeweiligen Subringbus 8a, 8b erfolgt über optische Verbindungsmodule 13.

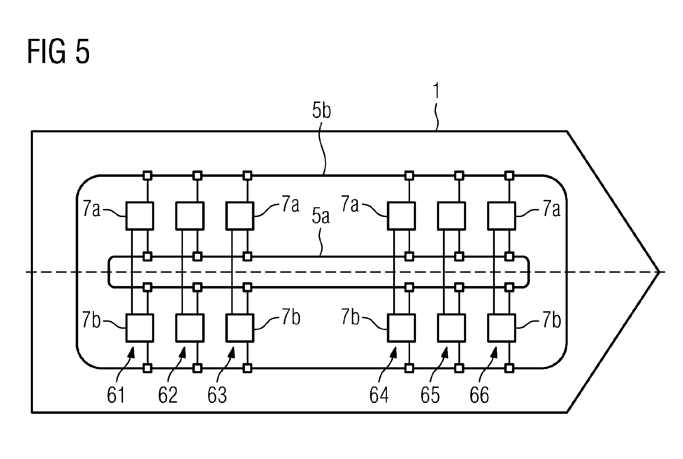

Von besonderem Vorteil weist ein Schiff ein in FIG 1 bzw. 3 dargestelltes Bedien- und Beobachtungssystem 2 auf, an dessen redundanten Hauptringbus 5 mehrere Schiffssysteme, vorzugsweise ein Energieerzeugungssystem, ein Antriebssystem und ein Schiffsbetriebssystem, angebunden sind, wobei jedes der Schiffssysteme wenigstens zwei einzeln und im Verbund betreibbare Schiffsteilsysteme und zwei übergeordnete zentrale Steuerungen 7a, 7b mit jeweils einem zugeordneten Subringbus 8a bzw. 8b zur Steuerung und Überwachung der Schiffsteilsysteme umfasst. Jedes der Schiffsysteme weist somit ein Paar übergeordneter zentraler Steuerungen 7a, 7b auf, die an den Hauptringbus 5 angebunden sind. FIG 5 zeigt hierfür beispielhaft ein Schiff 1 mit sechs derartigen Paaren 61- 66 übergeordneter zentraler Steuerungen 7a, 7b, wobei beispielsweise das Paar 61 zu einem Antriebssystem, das Paar 62 zu einem Energieerzeugungssystem und die Paare 63 - 66 zu Schiffsbetriebssystemen gehören.

Zur Erhöhung der Ausfallsicherheit verläuft einer der Busringe 5a, 5b, hier der Busring 5a, in Schiffslängsrichtung im Bereich der Schiffsmitte und der andere der Busringe 5a, 5b, hier der Busring 5b, in Schiffslängsrichtung entlang der beiden Schiffsaußenseiten. Bei einer Einwirkung von außen auf das Schiff, die zu einer Störung des entlang der Schiffsaußenseite verlaufenden Busringes führt, bleibt somit der im Bereich der Schiffsmitte verlaufende Busring weiter intakt.

Von besonderem Vorteil ist hierbei, dass die zentralen Steuerungen 7a, 7b sämtlicher Schiffssysteme und zahlreiche Komponenten der Subringbusse 8 dieser Schiffssysteme aus jeweils typgleichen Hardwarekomponenten aufgebaut werden können. Hierdurch kann die Komponentenvielfalt an Bord des Schiffes und die Ersatzteilhaltung beträchtlich reduziert werden. Außerdem kann für sämtliche dieser Schiffssysteme eine gleiche Software-Basis verwendet werden, d.h. eine jeweils gleiche Steuerungs-Software-Basis und gleiche Bediensoftware (v.a. gleiche Visualisierungsbilder). Es kann somit auch ein einziges Engineeringsystem für die Projektierung und Software-Generierung sämtlicher Schiffssysteme benutzt werden. Hierdurch kann auch die Anzahl der Software-Varianten und Engineering-Tools reduziert werden. Durch einheitliche Kommunikationsschnittstellen zwischen den unterschiedlichen Schiffssystemen kann die Kommunikation vereinfacht und auch hierdurch die Fehlerwahrscheinlichkeit reduziert werden. Insgesamt wird hierdurch auch der Schulungs- und Service-Aufwand reduziert.

Insbesondere können die lokalen Bedien- und Beobachtungseinrichtungen 12 der Schiffssysteme eine gleiche Visualisierung und Bedienphilosophie wie die an den Hauptringbus 5 angeschlossenen übergeordneten Bedien- und Beobachtungseinrichtungen 6 aufweisen. Bei Ausfall des Hauptringbusses 5 können dann die Schiffssysteme über die lokalen Bedien- und Beobachtungseinrichtungen 12 auf die gleiche Weise wie über die übergeordneten Bedien- und Beobachtungseinrichtungen gesteuert und überwacht werden.

## Patentansprüche

1. Schiff (1) mit einem Schiffssystem (3), insbesondere einem Energieerzeugungs-, Antriebs- oder Schiffsbetriebssystem, bestehend aus wenigstens zwei einzeln und im Verbund betreibbaren Schiffsteilsystemen (4a, 4b), mit einer ersten und einer zweiten übergeordneten zentralen Steuerung (7a bzw. 7b) zur Steuerung und Überwachung jeweils sämtlicher der wenigstens zwei Schiffsteilsysteme (4a, 4b) und mit einem Hauptringbus (5), wobei die erste übergeordnete zentrale Steuerung (7a) über einen ersten Subringbus (8a) und die zweite übergeordnete zentrale Steuerung (7b) über einen zweiten Subringbus (8a) mit zu steuernden und zu überwachenden Komponenten und/oder Subsystemen (20, 30) jeweils beider Schiffsteilsysteme (4a, 4b) verbunden ist, wobei der erste Subringbus (8a) über die erste zentrale übergeordnete Steuerung (7a) und der zweite Subringbus (8b) über die zweite übergeordnete zentrale Steuerung (7b) direkt an den Hauptringbus (5) angebunden sind.

2. Schiff (1) nach Anspruch 1,
**dadurch gekennzeichnet, dass** die zentralen Steuerungen (7a, 7b) derart eingerichtet und miteinander gekoppelt sind, dass in einem Normalbetrieb die erste zentrale Steuerung (7a) über den ersten Subringbus (8a) sämtliche Schiffsteilsysteme (4a, 4b) steuert und überwacht, und dass bei einem Ausfall der ersten zentralen Steuerung (7a) oder des ersten Subringbusses (8a) die zweite zentrale Steuerung (7b) über den zweiten Subringbus (8b) sämtliche Schiffsteilsysteme (4a, 4b) steuert und überwacht.

3. Schiff (1) nach Anspruch 1 oder 2,
**dadurch gekennzeichnet, dass** die zentralen übergeordneten Steuerungen (7a, 7b) der beiden Schiffsteilsysteme (4a, 4b) über den Hauptringbus (5) mit einer übergeordneten Bedien- und Beobachtungseinrichtung (6) verbunden sind, die vorzugsweise direkt an den Hauptringbus (5) angebunden ist.

4. Schiff (1) nach einem der vorhergehenden Ansprüche,
**dadurch gekennzeichnet, dass** die übergeordneten zentralen Steuerungen (7a, 7b) physikalisch sowohl von dem jeweiligen Subringbus (8a bz. 8b) als auch von dem Hauptringbus (6) getrennt sind.

5. Schiff (1) nach einem der vorhergehenden Ansprüche,
**dadurch gekennzeichnet, dass** die übergeordneten zentralen Steuerungen (7a, 7b) über eine direkte Leitungsverbindung (15) miteinander verbunden sind.

6. Schiff (1) nach einem der vorhergehenden Ansprüche,
**dadurch gekennzeichnet, dass** die übergeordneten zentralen Steuerungen (7a, 7b) räumlich unterschiedlich, insbesondere in unterschiedlichen Schiffsicherungsbereichen (SSB 1, SSB 2, SSB 3), in dem Schiff (1) angeordnet ist.

7. Schiff (1) nach einem der vorhergehenden Ansprüche,
**dadurch gekennzeichnet, dass** die Schiffsteilsysteme (4a, 4b) räumlich unterschiedlich, insbesondere in unterschiedlichen Schiffsicherungsbereichen, in dem Schiff (1) angeordnet sind.

8. Schiff (1) nach einem der vorhergehenden Ansprüche,
**dadurch gekennzeichnet, dass** sich die Subringbusse (8a, 8b) jeweils über zwei oder mehr Schiffsicherungsbereiche (SSB 1, SSB 2, SSB 3) erstrecken.

9. Schiff (1) nach einem der vorhergehenden Ansprüche,
**dadurch gekennzeichnet, dass** jeder der Subringbusse (8a, 8b) für einen autarken Betrieb der Teilsysteme (4a, 4b) mit einer lokalen Bedien- und Beobachtungseinrichtung (12) verbunden ist.

10. Schiff (1) nach einem der vorhergehenden Ansprüche,
**dadurch gekennzeichnet, dass** jedes der Schiffsteilsysteme (4a, 4b) mehrere Subsysteme (20, 30) mit jeweils mehreren Subsystemkomponenten (23, 24) umfasst, die über ein sternförmiges Bussystem (14) miteinander und mit jeweils beiden Subringbussen (8) in Verbindung stehen.

11. Schiff (1) nach einem der vorhergehenden Ansprüche,
**dadurch gekennzeichnet, dass** der Hautringbus (5) als ein doppelt redundanter Ringbus ausgebildet ist.

12. Schiff (1) nach einem der vorhergehenden Ansprüche,
**dadurch gekennzeichnet, dass** der Hautringbus (5) als ein optischer Ringbus ausgebildet ist, der vorzugsweise das Ethernet-Protokoll nutzt.

13. Schiff (1) nach einem der vorhergehenden Ansprüche,
**dadurch gekennzeichnet, dass** die Subringbusse (8) jeweils als ein optischer Ringbus ausgebildet sind, der vorzugsweise das Profibus-Protokoll nutzt.

14. Schiff (1) nach Anspruch 9,
**dadurch gekennzeichnet, dass** auf der lokalen Bedien- und Beobachtungseinrichtungen (12) und der übergeordneten Bedien- und Beobachtungseinrichtung die gleichen Anzeigebilder und Bedienfunktionen vorhanden sind.

15. Schiff mit mehreren Schiffssystemen (3, 40), insbesondere mit einem Energieerzeugungs-, einem Antriebs- und einem Schiffsbetriebssystem, jeweils bestehend aus wenigstens zwei einzeln und im Verbund betreibbaren Schiffsteilsystemen (4a, 4b bzw. 41a, 41b) nach einem der vorhergehenden Ansprüche.

16. Schiff nach Anspruch 15,
**dadurch gekennzeichnet, dass** die übergeordneten zentralen Steuerungen (7a, 7b) und Komponenten der Subringbusse (8a, 8b) der Schiffssysteme (3, 40) aus jeweils typgleichen Hardwarekomponenten aufgebaut sind.
